# EUROPÄISCHE PATENTSCHRIFT

(11) **EP 2 184 190 B1**
(45) Veröffentlichungstag und Bekanntmachung des Hinweises auf die Patenterteilung: **31.08.2011**
(21) Anmeldenummer: 09174661.0
(22) Anmeldetag: 30.10.2009
(51) Int. Cl.: B60H 1/00

(54) **Gehäusevorrichtung**
Housing assembly
Assemblage de boîtier

(30) Priorität: 07.11.2008 DE 102008056448
(43) Veröffentlichungstag der Anmeldung: 12.05.2010
(73) Patentinhaber: Behr GmbH & Co. KG, 70469 Stuttgart (DE)
(72) Erfinder: Schrumpf, Michael, 70186, Stuttgart (DE); Lindauer, Sascha, 73553, Alfdorf (DE)

(56) Entgegenhaltungen:
- WO-A1-2008/117548
- DE-A1- 19 838 174
- JP-A- 08 072 530
- JP-A- 2000 001 119
- US-A- 5 531 484
- US-A- 6 044 656
- US-A1- 2008 105 756
- US-B1- 6 178 764
- US-B2- 7 048 035

## Beschreibung

Die Erfindung betrifft eine Gehäusevorrichtung mit zumindest einer Montageausnehmung zur Aufnahme wenigstens eines Wärmeübertragers, welche zumindest eine Luftzuführvorrichtung aufweist, die benachbart zu der zumindest einer Montageausnehmung zumindest einen Luftführungshohlraum ausbildet, dessen Luftdurchlassquerschnitt sich in zumindest einem ersten Luftzuführungsbereich mit zunehmender Entfernung von zumindest einer Luftzuführungsöffnung verkleinert. Die Erfindung betrifft weiterhin eine Klimaanlage, insbesondere eine Kraftfahrzeugklimaanlage, sowie ein Fahrzeug, insbesondere ein Kraftfahrzeug.

Bei der Belüftung von Innenräumen erfolgt oftmals eine Klimatisierung der dem Innenraum zugeführten Luft. Dabei wird die Luft in Abhängigkeit von den Außentemperaturen erwärmt und mittlerweile oftmals auch abgekühlt.

Eine derartige Klimatisierung von Frischluft und/oder aus dem Innenraum wiedereintretender sog. Umluft erfolgt unter anderem auch bei Kraftfahrzeugen. Hier wird die dem Kraftfahrzeuginnenraum zugeführte Frischluft und/oder Umluft mit Hilfe von Wärmetauschern erwärmt und/oder abgekühlt. Zur Erwärmung der Luft dienen meist Heizkörper, die in den Kühlmittelkreislauf des Kraftfahrzeugs eingeschleift sind. Dadurch kann die Abwärme des Verbrennungsmotors zu Heizzwecken genutzt werden. Zur Abkühlung der Luft werden in der Regel Verdampfer verwendet, welche von einem in einem Kältemittelkreislauf zirkulierenden Kältemittel durchströmt werden.

Speziell im Kraftfahrzeugbau herrschen in der Regel sehr strenge Vorgaben hinsichtlich des zu Verfügung stehenden Bauraums sowie des erlaubten Gewichts für die Klimaanlage vor. Gleichzeitig sind die Komfortanforderungen der Kunden über die Jahre hinweg sukzessive gestiegen und nach wie vor ansteigend. So soll einerseits eine gute, gleichmäßige und komfortable Belüftung sicher gestellt werden. Darüber hinaus sollen die Betriebsgeräusche der Klimaanlage möglichst gering sein. Weiterhin soll das Kraftfahrzeug (und damit die Kraftfahrzeugklimaanlage) möglichst günstig sein, so dass es erforderlich ist, Kraftfahrzeugklimaanlagen mit möglichst geringem baulichen Aufwand besonders leise auszubilden. Weiterhin ist es wünschenswert, die verwendeten Wärmeübertrager möglichst effektiv zu nutzen. Eine Möglichkeit hierzu ist es, die Luftanströmung des Wärmeübertragers möglichst homogen zu gestalten. Damit kann gewährleistet werden, dass jedem Teil der den Wärmeübertrager durchströmenden Luft die gleiche Wärmemenge zugeführt bzw. entzogen wird. Gleichzeitig kann auf diese Weise die Wärmezufuhrleistung bzw. die Wärmeabfuhrleistung des Wärmeübertragers möglichst groß gewählt werden.

Insbesondere bei Verdampfern ist eine möglichst gleichmäßige Luftanströmung des Verdampfers auch wichtig, um das sogenannte Verdampferspritzen zu vermeiden. Beim Verdampferspritzen wird am Verdampfer kondensiertes Wasser durch zu hohe Luftgeschwindigkeiten in Form von Wassertröpfchen aus dem Verdampfer herausgetragen. Das so im Luftstrom befindliche Wasser stört die in Luftströmungsrichtung nachgeschalteten Teile der Klimaanlage zum Teil erheblich. Im Extremfall können auch Wassertröpfchen in den Fahrzeuginnenraum freigegeben werden. Dies ist naturgemäß unerwünscht.

Um die Luftanströmung des Wärmeübertragers zu vergleichmäßigen, wurde beispielsweise in JP 08-072530 A vorgeschlagen, durch eine stufenartige Ausbildung einer Gehäusewand den Luftdurchtrittsquerschnitt auf der Anströmseite des Wärmeübertragers zu verkleinern. Durch eine derartige Formgebung kann die Luftanströmung des Wärmeübertragers vergleichmäßigt werden, so dass die den Wärmeübertrager verlassende Luft eine gleichmäßigere Temperatur aufweist. Gegenüber Klimaanlagen mit einem im Wesentlichen konstanten Luftdurchgangsquerschnitt auf der Anströmseite des Wärmeübertragers kommt es jedoch zu keiner Geräuschreduktion. Im Gegenteil kann es sogar zu einer Verstärkung des Betriebsgeräusches kommen.

In JP 2000-1119 A wird eine weitere Fahrzeugklimaanlage beschrieben, bei der an der Gehäusewand, die sich benachbart zur Lufteinströmseite des Wärmeübertragers befindet, eine vorspringende Windleitplatte vorgesehen ist. Auch hier soll mit Hilfe der Windleitplatte die Luftanströmung des Wärmeübertragers gleichmäßiger gestaltet werden. Jedoch kommt es auch hier zu keiner Verminderung des Betriebsgeräusches. Ganz im Gegenteil kann es auch vorliegend durch die entstehenden Luftwirbel zu einer Erhöhung des Betriebsgeräuschs kommen.

In US 5,531,484 A wird vorgeschlagen, in dem, dem Wärmeübetrager vorgelagerten Luftleittunnel, eine Mehrzahl an Luftleitflügeln vorzusehen. Auch hier wird zwar die Luftanströmung des Wärmeübertragers vergleichmäßigt, jedoch kommt es nicht zu einer Verminderung des Betriebsgeräusches. Ganz im Gegenteil kann es zu einer Erhöhung des Betriebsgeräusches kommen. Darüber hinaus ist die Ausbildung der Luftleitflügel nicht unproblematisch und relativ kostenaufwändig.

In US 7,048,035 B2 ist ein weiteres Gehäuse für eine Kraftfahrzeugklimaanlage beschrieben. Hier wird vorgeschlagen, an der auf der Einströmseite des Wärmeübertragers liegenden Wand eine Mehrzahl an Luftleitlamellen mit geringer Höhe auszubilden. Durch die Luftleitlamellen soll auch hier die Anströmung des Wärmeübetragers verbessert werden. Jedoch kommt es auch hier zu keiner Verminderung des Betriebsgeräuschs. Im Gegenteil kann es durch die an den Luftleitlamellen entstehenden Verwirbelungen sogar zu einer Erhöhung des Betriebsgeräusches kommen.

US 2008/0105756 offenbart eine Klimaanlage nach dem Oberbegriff des Anspruchs 1.

Die Aufgabe der Erfindung liegt somit darin, eine gegenüber dem Stand der Technik verbesserte Gehäusevorrichtung vorzuschlagen. Weiterhin liegt der Erfindung die Aufgabe zugrunde, eine gegenüber dem Stand der Technik verbesserte Klimaanlage sowie ein gegenüber dem Stand der Technik verbessertes Fahrzeug vorzuschlagen.

Es wird vorgeschlagen, eine Gehäusevorrichtung mit zumindest einer Montageausnehmung zur Aufnahme wenigstens eines Wärmeübertragers, insbesondere eine Gehäusevorrichtung für eine Kraftfahrzeugklimaanlage mit zumindest einer Montageausnehmung zur Aufnahme eines Verdampfers, welches zumindest eine Luftzuführvorrichtung aufweist, welche benachbart zu der zumindest einen Montageausnehmung zumindest einen Luftzuführungshohlraum ausbildet, dessen Luftdurchlassquerschnitt sich in zumindest einem ersten Luftzuführungsbereich mit zunehmender Entfernung von zumindest einer Luftzuführungsöffnung verkleinert, dahingehend weiterzubilden, dass der Luftzuführungshohlraum zumindest einen zweiten Luftzuführungsbereich aufweist, dessen Luftdurchlassquerschnitt sich mit zunehmender Entfernung von der zumindest einen Luftzuführungsöffnung vergrößert. Unter der Vergrößerung bzw. Verkleinerung des Luftdurchlassquerschnitts ist insbesondere eine größere Variation des betreffenden Parameters zu verstehen, die insbesondere über eine größere Distanz hinweg erfolgt. Insbesondere handelt es sich also nicht notwendigerweise um eine Variation des Luftdurchlassquerschnitts von einigen wenigen Prozent, sondern um eine Variation des Luftdurchlassquerschnitts von beispielsweise 10 %, 15 %, 20 %, 25 %, gegebenenfalls auch mehr. Diese Variation kann sowohl die Verkleinerung des Luftdurchtrittsquerschnitts, als auch die Vergrößerung des Luftdurchtrittsquerschnitts betreffen. Darüber hinaus betrifft die Variation des Luftdurchtrittsquerschnitts bevorzugt die gesamte Breite des Wärmeübertragers, zumindest jedoch einen größeren Bereich, wie insbesondere zumindest 60 %, 70 %, 80 %, 90 %, 95 % oder mehr der Verdampferbreite. Weiterhin erfolgt die Verkleinerung des Luftdurchlassquerschnitts und/oder die Vergrößerung des Luftdurchlassquerschnitts vorzugsweise über einen nicht unbedeutenden Teil der Länge der Montageausnehmung des Wärmeübertragers hinweg. In diesem Zusammenhang ist an 10 %, 20 %, 30 %, 40 % oder mehr der Länge des Wärmeübertragers zu denken. Auch hier kann dies sowohl einen ersten Luftzuführungsbereich, bei dem sich der Luftdurchlassquerschnitt verkleinert und/oder einen zweiten Luftzuführungsbereich, bei dem sich der Luftdurchlassquerschnitt vergrößert, betreffen.

Sinnvoll ist es insbesondere, wenn sich der Luftdurchlassquerschnitt in zumindest einem ersten Luftzuführungsbereich und/oder in zumindest einem zweiten Luftzuführungsbereich zumindest im Wesentlichen zumindest bereichsweise stetig, vorzugsweise monoton, insbesondere streng monoton verkleinert bzw. vergrößert. In diesem Zusammenhang ist insbesondere an die mathematischen Definitionen der entsprechenden Begriffe zu denken. Insbesondere ist unter dem Begriff "stetig" verstehen, dass die Verkleinerung bzw. die Vergrößerung des Luftdurchlassquerschnitts über eine endliche Wegstrecke hinweg erfolgt. Es liegt also keine "Stufe", sondern beispielsweise eine Schräge vor. Entsprechend ist unter einer monotonen Verkleinerung bzw. monotonen Vergrößerung insbesondere zu verstehen, dass sich im betreffenden Bereich der Luftdurchlassquerschnitt ausschließlich erhöht oder zumindest konstant bleibt. Unter einer streng monotonen Verkleinerung bzw. streng monotonen Vergrößerung des Luftdurchlassquerschnitts ist dementsprechend üblicherweise zu verstehen, dass sich der Luftdurchlassquerschnitt im entsprechenden Bereich ausschließlich vergrößert bzw. ausschließlich verkleinert, ohne dass er über einen gewissen Bereich hinweg konstant bleibt. Der Übergang zwischen einzelnen Luftzuführungsbereichen und/oder einzelnen Bereichen innerhalb eines Luftzuführungsbereichs kann in beliebiger Weise mittels einer abgerundeten Kante ("differenzierbar") und/oder mittels einer scharfen Kante ("nicht-differenzierbar") erfolgen.

Als vorteilhaft kann es sich erweisen, wenn zumindest ein erster Luftzuführungsbereich und/oder zumindest ein zweiter Luftzuführungsbereich als Gehäusewand der Luftzuführungsvorrichtung ausgebildet ist. Mit einer derartigen Ausbildung ist es insbesondere möglich, die Gehäusevorrichtung besonders einfach und kostengünstig auszubilden. Denn die Gehäusevorrichtung benötigt in aller Regel ohnehin eine Gehäusewand in den betreffenden Bereichen. Mit anderen Worten ist es möglich, die ohnhehin vorhandene Gehäusewand durch eine geeignete Formgebung so auszuführen, dass sich der zumindest eine erste Luftzuführungsbereich und/oder der zumindest eine zweite Luftzuführungsbereich bildet. Darüber hinaus kann sich bei der vorgeschlagenen Ausbildung auch ein Bauraumvorteil ergeben. Denn durch eine Formgebung/Verformung der Gehäusewand "nach innen" kann auf der Außenseite der Gehäusevorrichtung im entsprechenden Bereich ein Bauraum für andere Komponenten geschaffen werden.

Vorteilhaft ist es, wenn zumindest eine Luftkammereinrichtung vorgesehen wird, welche durch zumindest einen zweiten Luftzuführungsbereich begrenzt wird. Vorzugsweise wird zumindest eine Luftkammervorrichtung durch zumindest einen Luftführungsbereich und zumindest einen zweiten Luftzuführungsbereich begrenzt. Durch eine derartige Luftkammereinrichtung ist es möglich, eine deutliche Verringerung der hohen Luftgeschwindigkeiten in diesem Bereich zu erreichen. Dies kann zu einer deutlichen Verringerung der Betriebsgeräusche der Klimaanlage führen. Durch die Luftkammereinrichtung ist es aber auch möglich, dass in dieser ein Wirbel erzeugt wird, der der Hauptluftströmung auf den Verdampfer in diesem Bereich Energie entzieht. Dies kann mit einer Reduktion des Geräuschpegels korrespondieren. Möglich ist es auch, dass durch Reflexion von Geräuschen an den Wänden der Luftkammereinrichtung ein Teil der Schallwellen durch destruktive Interferenz ausgelöscht wird.

Es hat sich gezeigt, dass die Betriebsgeräusche besonders niedrig sein können, wenn die Länge der zumindest einen Luftkammervorrichtung nicht mehr als das 0,6-fache, bevorzugt nicht mehr als das 0,5-fache, besonders bevorzugt nicht mehr als das 0,45-fache, insbesondere nicht mehr als das 0,4-fache der Gesamtlänge der Luftzuführungsvorrichtung und/oder wenn die Länge der zumindest einen Luftkammervorrichtung nicht weniger als das 0,2-fache, bevorzugt nicht weniger als das 0,3-fache, besonders bevorzugt nicht weniger als das 0,4-fache, insbesondere nicht weniger als das 0,45-fache der Gesamtlänge der Luftführungsvorrichtung beträgt. Mit der vorgeschlagenen Dimensionierung kann eine besonders hohe Geräuschreduktion bei relativ geringem (zusätzlichem) Bauraum erzielt werden.

Eine weitere vorteilhafte Dimensionierung kann sich ergeben, wenn bei der Gehäusevorrichtung der Luftdurchlassquerschnitt in zumindest einem Übergangsbereich zwischen zumindest einem ersten Luftführungsbereich und zumindest einem zweiten Luftzuführungsbereich nicht mehr als das 0,6-fache, bevorzugt nicht mehr als das 0,5-fache, besonders bevorzugt nicht mehr als das 0,45-fache, insbesondere nicht mehr als das 0,4-fache des Luftdurchgangsquerschnitt der Luftzuführungsöffnung und/oder der Luftdurchlassquerschnitt in zumindest einem Übergangsbereich zwischen zumindest einem ersten Luftzuführungsbereich und zumindest einem zweiten Luftzuführungsbereich nicht weniger als das 0,3-fache, bevorzugt nicht weniger als das 0,4-fache, besonders bevorzugt nicht weniger als das 0,45-fache, insbesondere nicht weniger als das 0,5-fache des Luftdurchgangsquerschnitts der Luftzuführungsöffnung beträgt. Bei diesem Übergangsbereich kann es sich insbesondere um die "Einschnürung" zu zwischen dem der Luftzuführungsöffnung benachbarten Luftzuführungsbereich und einer Luftkammereinrichtung handeln. Auch hier kann dank der vorgeschlagenen Dimensionierung eine besonders große Geräuschreduktion erzielt werden.

Eine weitere besonders vorteilhafte Dimensionierung der Gehäusevorrichtung ergibt sich, wenn der Luftdurchlassquerschnitt in zumindest einem Teil zumindest einer Luftkammereinrichtung nicht weniger als das 0,6-fache, bevorzugt nicht weniger als das 0,7-fache, besonders bevorzugt nicht weniger als das 0,8-fache, insbesondere nicht weniger als das 0,9-fache des Luftdurchlassquerschnitts der Luftzuführungsöffnung und/oder der Luftdurchlassquerschnitt in zumindest einem Teil zumindest einer Luftkammereinrichtung nicht mehr als das 1,1-fache, bevorzugt nicht mehr als das 1,0-fache, besonders bevorzugt nicht mehr als das 0,9-fache, insbesondere nicht mehr als das 0,8-fache des Luftdurchlassquerschnitts der Luftzuführungsöffnung beträgt. Auch hier können sich besonders große Vorteile hinsichtlich der Geräuschreduktion einer im Betrieb befindlichen Klimaanlage ergeben.

Vorteilhaft kann es weiterhin sein, wenn zumindest eine Luftkammereinrichtung eine dreieckige und/oder viereckige Formgebung aufweist. Eine derartige Formgebung hat sich hinsichtlich der erzielbaren Geräuschreduktion als besonders vorteilhaft erwiesen. Hier scheint es zu einer besonders effektiven destruktiven Interferenz der Schallwellen zu kommen. Die genannte Formgebung der Luftkammereinrichtung bezieht sich dabei in der Regel auf eine Blickrichtung auf eine Ebene, die parallel zur Luftdurchströmung der im Betrieb befindlichen Klimaanlage liegt.

Sinnvoll kann es auch sein, zumindest eine Luftkammereinrichtung asymmetrisch auszubilden, wobei insbesondere zumindest ein erster Luftzuführungsbereich und zumindest ein zweiter Luftzuführungsbereich eine unterschiedliche Länge aufweist. Es hat sich gezeigt, dass eine asymmetrische Formgebung hinsichtlich der Geräuschreduktion oftmals einer symmetrischen Ausbildung der Luftkammereinrichtung überlegen ist. Auch hier scheint dies darin begründet zu liegen, dass es bei einer derartigen Formgebung zu einer besonders effektiven destruktiven Interferenz der entstehenden Schallwellen kommen kann.

Weiterhin kann es sich als vorteilhaft erweisen, wenn bei der Gehäusevorrichtung zumindest eine Gehäusewand, insbesondere zumindest eine Gehäusewand zumindest einer Luftkammereinrichtung, zumindest bereichsweise eine geräuschabsorbierende Beschichtung aufweist. Dadurch können die im Betrieb entstehenden Geräusche zusätzlich gedämpft werden. Durch das Vorsehen zumindest eines zweiten Luftzuführungsbereichs und/oder eines zusätzlichen ersten Luftzuführungsbereich beziehungsweise weiterer zusätzlicher erster Luftzuführungsbereiche können dabei zusätzliche Wandlängen zur Verfügung gestellt werden, die mit einer geräuschabsorbierenden Beschichtung versehen werden können. Einhergehend mit einer derartigen "größeren Länge" der geräuschabsorbierenden Beschichtung kann auch eine Verringerung der entstehenden Geräusche einhergehen. Als geräuschabsorbierende Beschichtung können beispielsweise sogenannte Akustik-Pads verwendet werden. Besonders vorteilhaft ist es, wenn die geräuschabsorbierende Beschichtung insbesondere im Bereich der Luftkammereinrichtung vorgesehen wird.

Eine sinnvolle Bauausführung der Gehäusevorrichtung ergibt sich, wenn zumindest eine Luftzuführungsöffnung zumindest bereichsweise seitlich zum Luftzuführungshohlraum angeordnet ist und/oder im Bereich zumindest einer Luftzuführungsöffnung ein Lufteintritt schräg zu zumindest einer Montageausnehmung erfolgt. Mit Hilfe einer derartigen Bauausführung kann eine kompakte, auf die Bauraumverhältnisse bei einem Kraftfahrzeug (insbesondere bei einem Automobil) vorteilhaft angepasste Formgebung der Gehäusevorrichtung erreicht werden.

Weiterhin wird eine Klimaanlage vorgeschlagen, welche eine Gehäusevorrichtung mit dem obengenannten Aufbau aufweist. Die Klimaanlage weist dann die bereits beschriebenen Eigenschaften und Vorteile in analoger Weise auf. Insbesondere handelt es sich bei der Klimaanlage um eine Kraftfahrzeugklimaanlage.

Insbesondere ist es möglich, die Klimaanlage derart weiterzubilden, dass in zumindest einer Montageausnehmung zumindest ein Wärmeübertrager, insbesondere zumindest ein Verdampfer angeordnet ist.

Weiterhin wird ein Fahrzeug vorgeschlagen, welches wenigstens eine Gehäusevorrichtung mit oben beschriebenem Aufbau und/oder wenigstens eine Klimaanlage mit dem vorab beschriebenen Aufbau aufweist. Ein derart ausgebildetes Fahrzeug weist die bereits vorab beschriebenen Eigenschaften und Vorteile in analoger Weise auf. Insbesondere kann es sich bei dem Fahrzeug um ein Kraftfahrzeug handeln. Bei dem (Kraft-) Fahrzeug kann es sich in beliebiger Weise um ein Landfahrzeug (schienengebunden/nicht schienengebunden), ein Wasserfahrzeug und/oder ein Luftfahrzeug handeln.

Im Folgenden wird die Erfindung an Hand von Ausführungsbeispielen und unter Bezugnahme auf die beigefügten Zeichnungen näher beschrieben.

Es zeigen:
- Fig. 1: ein erstes Ausführungsbeispiel für ein Klimaanlagengehäuse in einem schematischen Querschnitt von oben gesehen;
- Fig. 2:: weitere Ausbildungsmöglichkeiten für ein Klimaanlagengehäuse im schematischen Querschnitt von oben gesehen.

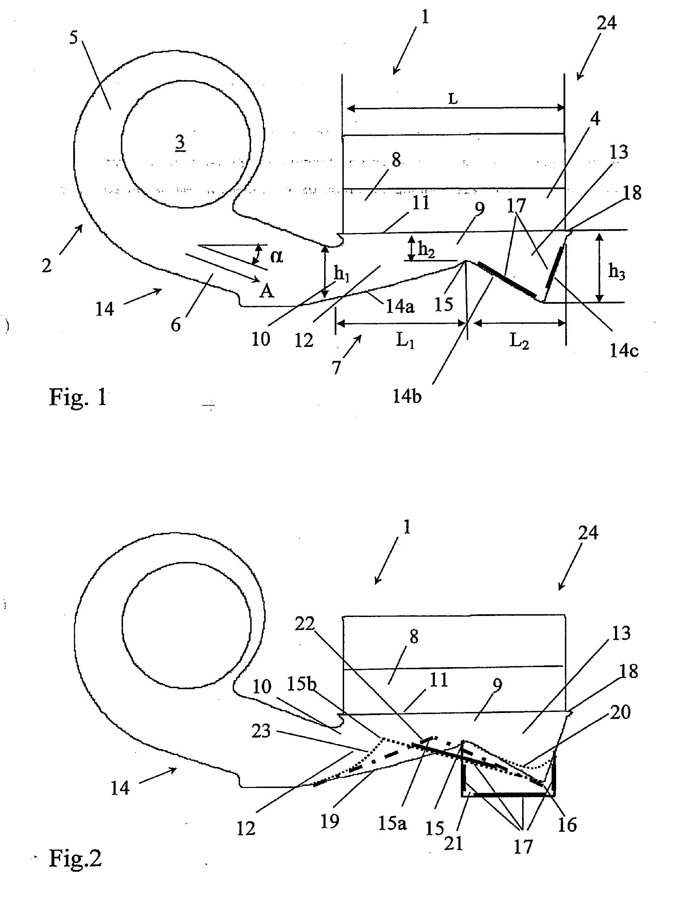

In Fig. 1 ist ein erstes Ausführungsbeispiel für ein Klimaanlagengehäuse 1 dargestellt. Das Klimaanlagengehäuse 1 ist in einer schematischen Querschnittsansicht von oben dargestellt. Im in Fig. 1 linken Teil weist das Klimaanlagengehäuse 1 einen ersten Gehäuseteil 2 zur Aufnahme eines Gebläserads 3 auf. Das Gebläserad 3 ist in Fig. 1 nur schematisch dargestellt. Im vorliegend dargestellten Ausführungsbeispiel handelt es sich bei dem Gebläserad 3 um ein Radialgebläserad, welches Luft von Inneren des Gebläserads 3 nach außen in den Druckraum 5 des ersten Gehäuseteils 2 des Klimaanlagengehäuses 1 fördert.

Die vom Gebläserad 3 geförderte Luft strömt durch einen Verbindungskanal 6 hindurch in einen zweiten Gehäuseteil 7 des Klimaanlagengehäuses 1 hinein. Im zweiten Gehäuseteil 7 ist in einem entsprechend ausgeformten Montagebereich bzw. einer Montageausnehmung 4 ein Verdampfer 8 angeordnet. In Luftströmungsrichtung vor dem Verdampfer 8 befindet sich ein Luftverteilbereich 9. Die über den Verbindungskanal 6 heran geführte Luft tritt über die Eintrittsöffnung 10 in den Luftverteilbereich 9 ein. Der Luftverteilbereich 9 hat die Aufgabe, diese Luftströmung möglichst gleichmäßig über die Stirnseite 11 des Verdampfers hinweg zu verteilen. Insbesondere soll die Geschwindigkeit, mit der die Luft den Verdampfer 8 durchströmt, möglichst homogen sein. Gleichzeitig soll das Klimaanlagengehäuse 1 jedoch auch so ausgeführt sein, dass beim Betrieb der Klimaanlage 24 möglichst wenig Betriebsgeräusche entstehen. An dieser Stelle sei noch angemerkt, dass weitere Komponenten der Klimaanlage 24, wie Heizungswärmetauscher, Luftklappen, Luftverteil -oder Mischräume in den Fig.1 und 2 nicht dargestellt sind.

Wie man Fig. 1 entnehmen kann, ist der Verbindungskanal 6 zwischen erstem Gehäuseteil 2 und zweitem Gehäuseteil 7 schräg angeordnet. Die Luftströmung A verläuft dadurch im Verbindungskanal 6 unter einem Winkel α zur Stirnseite 11 des Verdampfers 8. Der Winkel α ist im vorliegend dargestellten Ausführungsbeispiel mit α = 20° gewählt. Versuche haben ergeben, dass durch eine derartige Schrägstellung eine besonders große Geräuschreduktion erzielt werden kann.

Wie man weiter der Fig. 1 entnehmen kann, lässt sich der Luftverteilbereich 9 in eine vordere Kammer 12 und eine hintere Kammer 13 unterteilen. Die Gehäusewand 14 des Klimaanlagengehäuses 1 ist im Bereich 14a der vorderen Kammer 12 des Luftverteilbereichs 9 schräg zur Stirnseite 11 des Verdampfers 8 verlaufend ausgebildet. Auf diese Weise wird der Luftdurchgangsquerschnitt, der der in den Luftverteilbereich 9 einströmenden Luft A zur Verfügung steht, im Bereich der vorderen Kammer 12 sukzessive kleiner. Im vorliegend dargestellten Ausführungsbeispiel verkleinert sich die Höhe h₁, die der Luftströmung A im Bereich der Eintrittsöffnung 10 zur Verfügung steht auf die Höhe h₂ im Bereich der Knickstelle 15 der Gehäusewand 14. Diese Knickstelle 15 definiert den Übergang des Luftverteilbereichs 9 von der vorderen Kammer 12 in die hintere Kammer 13. Im vorliegend dargestellten Ausführungsbeispiel ist h₂ ungefähr halb so groß wie h₁ gewählt. Die Länge L₁ der vorderen Kammer 12 des Luftverteilbereichs 9 beträgt in vorliegend dargestelltem Ausführungsbeispiel etwa 55 % der Gesamtlänge L des Verdampfers 8 bzw. des Luftverteilbereichs 9. Da die Breite des Verdampfers 8 bzw. die Breite des Luftverteilbereichs 9 (verläuft in Richtung der Zeicheneben von Fig. 1) im Wesentlichen konstant ist, gelten die Angaben somit analog für den Luftdurchtrittsquerschnitt, der der Luftströmung A zwischen der Eintrittsöffnung 10 und der Knickstelle 15 zur Verfügung steht.

Hinter der Knickstelle 15 ist der sich dort anschließende Teil 14b der Gehäusewand 14 so angeordnet, dass sich der Luftdurchtrittsquerschnitt ausgehend von der Knickstelle 15 bis hin zur Außenkante 16 der hinteren Kammer 13 des Luftverteilbereichs 9 erweitert. Im Bereich der Außenkante 16 beträgt die Höhe h₃. Dabei ist die Höhe h₃ im Bereich der Außenkante 16 im Wesentlichen so gewählt, dass sie der Höhe h₁ im Bereich der Eintrittsöffnung im Wesentlichen entspricht. Auf Grund der im vorliegend dargestellten Ausführungsbeispiel gewählten konstanten Breite des Luftverteilbereichs 9 bzw. des Verdampfers 8 gilt das entsprechende auch für den dem Luftstrom A zur Verfügung stehenden Luftdurchtrittsquerschnitt.

Hinter der Außenkante 16 folgt ein weiterer Bereich 14c der Gehäusewand 14, bei dem sich die Höhe h zwischen Gehäusewand 14 und Stirnseite 11 des Verdampfers 8 im Wesentlichen auf Null reduziert.

Die entsprechenden Teile 14a, 14b, 14c der Gehäusewand 14 bilden somit auf Grund ihrer Lage, Anordnung und Ausrichtung die vordere Kammer 12 sowie die hintere Kammer 13 des Luftverteilbereichs 9 aus. Durch die im vorliegend dargestellten Ausführungsbeispiel gewählte Lage der Gehäusewandbereiche 14b, 14c der hinteren Kammer 13 ergibt sich eine in etwa dreieckige Form der hinteren Kammer 13. In der hinteren Kammer 13 kann sich bei Vorhandensein einer Luftströmung A ein Luftwirbel bilden, der der Hauptluftströmung in diesem Oberflächenbereich des Verdampfers 8 Energie entziehen kann. Dadurch kann die Luftanströmung auf den Verdampfer 8 vergleichmäßigt werden und überdies können Geräusche verringert werden. Um eine zusätzliche Geräuschreduktion zu realisieren sind im vorliegend dargestellten Ausführungsbeispiel an den Gehäusewandbereichen 14b, 14c im Bereich der hinteren Kammer 13 des Luftverteilbereichs 9 sogenannte Akustik-Pads 17 aufgeklebt. Diese Akustik-Pads 17 reduzieren die auftretenden Betriebsgeräusche beim Betrieb der Klimaanlage 24 nochmals. Versuche haben ergeben, dass die Akustik-Pads 17 insbesondere im Bereich der hinteren Kammer 13 wirksam sind. Aus Kosteneinsparungsgründen sind daher im vorliegend dargestellten Ausführungsbeispiel im Gehäusewandbereich 14a, der benachbart zur vorderen Kammer 12 des Luftverteilbereichs 9 liegt, keine Akustik-Pads 17 vorgesehen. Jedoch ist es durchaus denkbar auch in diesem Bereich 14a Akustik-Pads 17 vorzusehen, beispielsweise um besonders hohen Komfortansprüchen zu genügen. Die Akustik-Pads 17 sind vorzugsweise aus einem schallabsorbierenden Material, wie beispielsweise einem Vlies, insbesondere PET-Vlies, einem Schaumstoff oder Filz gebildet. Bevorzugt sind die Akustik-Pads an die Wandung geklebt, angespritzt oder angeschäumt.

Entsprechend der Länge L₁ der vorderen Kammer 12 des Luftverteilbereichs 9 entspricht die Gesamtlänge L₂ der hinteren Kammer 13 im vorliegend dargestellten Ausführungsbeispiel etwa 45 % der Gesamtlänge L des Verdampfers 8. Die Länge L₂ der hinteren Kammer 13 unterteilt sich dabei vorliegend derart, dass der Bereich zwischen Knickstelle 15 und Außenkante 16 etwa ¾ der Länge L₂ der hinteren Kammer 13 beträgt. Entsprechend verbleibt für den Bereich zwischen Außenkante 16 und Endbereich 18 etwa ¼ der Länge L₂ der hinteren Kammer 13.

In Fig. 2 sind exemplarisch in schematischer Ansicht unterschiedliche denkbare Ausbildungsformen des Luftverteilbereichs 9 dargestellt. Die erste, durch einen dünnen durchgezogenen Strich dargestellte Kontur 19 entspricht dabei im Wesentlichen der in Fig. 1 dargestellten Kontur der Gehäusewand 14.

Eine erste alternative Ausführungsform ist in Form der zweiten Kontur 20 dargestellt, die in Fig. 2 in Form einer dünnen, gepunkteten Linie eingezeichnet ist. Die zweite Kontur 20 weicht im Wesentlichen nur im Bereich der hinteren Kammer 13 des Luftverteilbereichs 9 von der ersten Kontur 19 ab. Dabei ist die zweite Kontur 20 derart ausgeführt, dass sich im Bereich der Außenkante 16 eine abgerundete Form ergibt. Je nach konkretem Ausführungsbeispiel können sich dadurch nochmals verbesserte Akustikwerte für das Klimaanlagengehäuse 1 beziehungsweise für die Klimaanlage 24 ergeben. Im Bereich der vorderen Kammer 12 des Luftverteilbereichs 9 verläuft die zweite Kontur 20 dagegen identisch zur ersten Kontur 19 und ist daher vorliegend nicht zu erkennen.

Eine weitere mögliche Ausführungsform liegt in Gestalt der dritten Kontur 21 vor, die vorliegend als dicke, durchgezogene Linie 21 dargestellt ist. Die dritte Kontur 21 weicht ebenfalls nur im Bereich der hinteren Kammer 13 des Luftverteilbereichs 9 von der ersten Kontur 19 bzw. der zweiten Kontur 20 ab. Die dritte Kontur 21 ist so gewählt, dass die hintere Kammer 13 zwischen der Knickstelle 15 und dem Endbereich 18 eine im Wesentlichen rechteckige Form aufweist. Auch durch eine derartige Form der Gehäusewand 14 lassen sich je nach konkretem Einsatz des Klimaanlagengehäuses 1 beziehungsweise der Klimaanlage 24 besonders günstige Akustikwerte erzielen. Die drei Wandbereiche der rechteckförmigen Kontur 21 sind optional mit Akustik-Pads 17 ausgekleidet, bzw. sind diese an die Wandbereiche geklebt. Im Bereich der vorderen Kammer 12 folgt die dritte Kontur 21 der ersten Kontur 19. Aus Übersichtlichkeitsgründen ist die durchgezogene, dicke Linie der dritten Kontur 21 im Bereich der vorderen Kammer 12 nicht eingezeichnet.

Eine weitere mögliche Ausführungsform ergibt sich in Form der vierten Kontur 22. Die vierte Kontur 22 ist in Fig. 2 als Punkt-Strich-Linie 22 eingezeichnet. Wie man Fig. 2 entnehmen kann ist bei der vierten Kontur 22 im Verhältnis zur ersten Kontur 19 die Knickstelle 15 zur Position 15a hin verschoben. In vorliegend dargestelltem Ausführungsbeispiel ist die Knickstelle 15 so angeordnet, dass die Länge L₁ zwischen Eintrittsöffnung 10 und Knickstelle 15a etwa 40 % der Gesamtlänge L des Verdampfers 8 bzw. des Luftverteilbereichs 9 beträgt. Auch hier können sich je nach konkretem Einsatzerfordernis besonders günstige Akustikeigenschaften des Klimaanlagengehäuses 1 beziehungsweise der Klimaanlage 24 ergeben.

Schließlich ist in Fig. 2 noch eine fünfte Kontur 23 eingezeichnet. Bei der fünften Kontur 23 ist die Knickstelle 15b noch weiter in Richtung der Eintrittsöffnung 10 verschoben. Bei der vorliegend dargestellten Ausführungsform beträgt die Länge L₁ zwischen Eintrittsöffnung 10 und Knickstelle 15b der fünften Kontur 23 etwa 20 % der Gesamtlänge L des Verdampfers 8 bzw. des Luftverteilbereichs 9. Auf der in Luftströmungsrichtung nach der Knickstelle 15b verlaufenden wand der Kontur 23 ist wiederum ein Akustik-Pad 17 angeordnet. Auch durch die fünfte Kontur 23 können sich je nach konkretem Einsatzerfordernis besonders günstige Akustikwerte für das Klimaanlagengehäuse 1 beziehungsweise die Klimaanlage 24 ergeben.

Die Akustik-Pads 17 in allen Ausführungsbeispielen können auch entfallen bzw. an weiteren Stellen, insbesondere im gesamten Konturverlauf angeordnet sein.

## Patentansprüche

1. Gehäusevorrichtung (1) einer Kraftfahrzeugklimaanlage mit zumindest einer Montageausnehmung (4) zur Aufnahme eines Verdampfers (8), aufweisend zumindest eine Luftzuführvorrichtung (7), welche benachbart zu der zumindest einen Montageausnehmung (4) zumindest einen Luftzuführungshohlraum (9) ausbildet, dessen Luftdurchlassquerschnitt (h) sich in zumindest einem ersten Luftzuführungsbereich (14a, 14c) mit zunehmender Entfernung von zumindest einer Luftzuführungsöffnung (10) verkleinert der Luftzuführungshohlraum (9) zumindest einen zweiten Luftzuführungsbereich (14b) aufweist, dessen Luftdurchlassquerschnitt (h) sich mit zunehmender Entfernung von der zumindest einen Luftzuführungsöffnung (10) vergrößert, wobei wobei zumindest eine Luftzuführungsöffnung (10) zumindest bereichsweise seitlich zum Luftzuführungshohlraum (9) angeordnet ist und im Bereich zumindest einer Luftzuführungsöffnung (10) ein Lüfteintritt (A) schräg (α) zu zumindest einer Montageausnehmung (4) erfolgt und **dadurch gekennzeichnet, dass**, wobei die Lüftzuführungsöffnung (10) senkrecht zu der von der Luftstromüng angeströmten Stirnfläche des Verdampfers steht und der Lufteintritt derart schräg (x) erfolgt, daß die Komponente des Lufteintritts senkrecht zur Stirnfläche des Verdampfers (8) vom Verdampfer (8) weg weist.

2. Gehäusevorrichtung (1) nach Anspruch 1, **dadurch gekennzeichnet, dass** sich der Luftdurchlassquerschnitt (h) in zumindest einem ersten Luftzuführungsbereich (14a, 14c) und/oder in zumindest einem zweiten Luftzuführungsbereich (14b) zumindest im Wesentlichen zumindest bereichsweise stetig, vorzugsweise monoton, insbesondere streng monoton verkleinert (14a, 14c) beziehungsweise vergrößert (14b).

3. Gehäusevorrichtung (1) nach Anspruch 1 oder 2, **dadurch gekennzeichnet, dass** zumindest ein erster Luftzuführungsbereich (14a, 14c) und/oder zumindest ein zweiter Luftzuführungsbereich (14b) als Gehäusewand (14) der Luftzuführungsvorrichtung (9) ausgebildet ist.

4. Gehäusevorrichtung (1) nach einem der vorangehenden Ansprüche, **gekennzeichnet durch** zumindest eine Luftkammereinrichtung (13), welche durch zumindest einen zweiten Luftzuführungsbereich (14b), vorzugsweise **durch** zumindest einen ersten Luftzuführungsbereich (14a, 14c) und zumindest einen zweiten Luftzuführungsbereich (14b) begrenzt wird.

5. Gehäusevorrichtung (1) nach einem der vorangehenden Ansprüche, **dadurch gekennzeichnet, dass** die Länge (L₂) der zumindest einen Luftkammervorrichtung (13) nicht mehr als das 0,6-fache, bevorzugt nicht mehr als das 0,5-fache, besonders bevorzugt nicht mehr als das 0,45-fache, insbesondere nicht mehr als das 0,4-fache der Gesamtlänge (L) der Luftzuführungsvorrichtung (9) und/oder dass die Länge (L₂) der zumindest einen Luftkammervorrichtung (9) nicht weniger als das 0,2-fache, bevorzugt nicht weniger als das 0,3-fache, besonders bevorzugt nicht weniger als das 0,4-fache, insbesondere nicht weniger als das 0,45-fache der Gesamtlänge (L) der Luffzuführungsvorrichtung (9) beträgt.

6. Gehäusevorrichtung (1) nach einem der vorangehenden Ansprüche, **dadurch gekennzeichnet, dass** der Lufldurchlassquerschnitt (h₂) in zumindest einem Übergangsbereich (15) zwischen zumindest einem ersten Luftzuführungsbereich (14a, 14c) und zumindest einen zweiten Luftzuführungsbereich (14b) nicht mehr als das 0,6-fache, bevorzugt nicht mehr als das 0,5-fache, besonders bevorzugt nicht mehr als das 0,45-fache, insbesondere nicht mehr als das 0,4-fache des Luftdurchgangsquerschnitts (h₁) der Luftzuführungsöffnung (10) und/oder der Luftdurchlassquerschnitt (h₂) in zumindest einem Übergangsbereich (15) zwischen zumindest einem ersten Luftzuführungsbereich (14a, 14c) und zumindest einen zweiten Luftzuführungsbereich (14b) nicht weniger als das 0,3-fache, bevorzugt nicht weniger als das 0,4-fache, besonders bevorzugt nicht weniger als das 0,45-fache, insbesondere nicht weniger als das 0,5-fache des Luftdurchgangsquerschnitts (h₁) der Luftzuführungsöffnung (10) beträgt.

7. Gehäusevorrichtung (1) nach einem der vorangehenden Ansprüche, **dadurch gekennzeichnet, dass** der Luftdurchlassquerschnitt (h₃) in zumindest einem Teil zumindest einer Luftkammereinrichtung (13) nicht weniger als das 0,6-face, bevorzugt nicht weniger als das 0,7-flache, besonders bevorzugt nicht weniger als das 0,8-fache, insbesondere nicht weniger als das 0,9 fache des Luftdurchlassquerschnitts (h₁) der Luftzuführungsöffnung (10) und/oder der Luftdurchlassquerschnitt (h₃) In zumindest einem Tell zumindest einer Luftkammereinrichtung (13) nicht mehr als das 1.1-fach, bevorzugt nicht mehr als das 1,0-fache, besonders bevorzugt nicht mehr als das 0,9-fache, insbesondere nicht mehr als das 0,8-fache des Luftdurchlassquerschnitts (h₁) der Luftzuführungsöffnung (10) beträgt.

8. Gehäusevorrichtung (1) nach einem der vorangehenden Ansprüche, **dadurch gekennzeichnet, dass** zumindest eine Luftkammereinrichtung (13) eine dreleckige und/oder viereckige Formgebung aufweist.

9. Gehäusevorrichtung (1) nach einem der vorangehenden Ansprüche, **dadurch gekennzeichnet, dass** zumindest eine Luftkammereinrichtung (13) asymmetrisch ausgebildet ist und insbesondere zumindest ein erster Luftzuführungsbereich (14a, 14c) und zumindest ein zweiter Luftzuführungsbereich (14b) eine unterschiedliche Länge (L) aufweisen.

10. Gehäusevorrichtung (1) nach einem der vorangehenden Ansprüche, **dadurch gekennzeichnet, dass** zumindest eine Gehäusewand (14), insbesondere zumindest eine Gehäusewand (14b, 14c) zumindest einer Luftkammereinrichtung (13), zumindest bereichsweise eine geräuschabsorbierende Beschichtung (17) aufweist.

11. Klimaanlage (24), insbesondere Kraftfahrzeugklimaanlage, **gekennzeichnet durch** eine Gehäusevorrichtung (1) nach einem der Ansprüche 1 bis 10.

12. Klimaanlage (24) nach Anspruch 11, **dadurch gekennzeichnet, dass** in der zumindest einen Montageausnehmung (4) zumindest ein Wärmeübertrager (8), insbesondere zumindest ein Verdampfer (8) angeordnet ist.

13. Fahrzeug, insbesondere Kraftfahrzeug, aufweisend wenigstens eine Gehäusevorrichtung (1) nach einem der Ansprüche 1 bis 10 und/oder wenigstens eine Klimaanlage (24) nach Anspruch 11 oder 12.

## Claims

1. A housing assembly (1) of a motor vehicle air-conditioning system, having at least one mounting recess (4) for receiving an evaporator (8), comprising at least one air supply device (7), which adjacent to the at least one mounting recess (4) forms at least one air supply hollow space (9), the air passage cross-section (h) of which decreases in at least one first air supply region (14a, 14c) as the distance from at least one air supply opening (10) increases, with the air supply hollow space (9) comprising at least one second air supply region (14b), the air passage cross-section (h) of which increases as the distance from the at least one air supply opening (10) increases, with at least one air supply opening (10) being disposed at least in some regions laterally of the air supply hollow space (9) and air inflow (A) taking place in the region of at least one air supply opening (10) obliquely (α) to at least one mounting recess (4), and **characterised in that** the air supply opening (10) is perpendicular to the end face of the evaporator against which the air flow flows and the air inflow occurs obliquely (α) such that the component of the air inflow points away from the evaporator (8) perpendicular to the end face of the evaporator (8).

2. The housing assembly (1) according to claim 1, **characterized in that** the air passage cross-section (h) in at least one first air supply region (14a, 14c) and/or in at least one second air supply region (14b) at least substantially in at least some regions steadily, preferably monotically, in particular strictly monotically decreases (14a, 14c) or increases (14b).

3. The housing assembly (1) according to claim 1 or 2, **characterized in that** at least one first air supply region (14a, 14c) and/or at least one second air supply region (14b) is designed as a housing wall (14) of the air supply device (9).

4. A housing assembly (1) according to any one of the preceding claims, **characterized by** at least one air chamber unit (13), which is delimited by at least one second air supply region (14b), preferably by at least one first air supply region (14a, 14c) and at least one second air supply region (14b).

5. A housing assembly (1) according to any one of the preceding claims, **characterized in that** the length (L₂) of the at least one air chamber unit (13) is no more than 0.6 times, preferably no more than 0.5 times, particularly preferably no more than 0.45 times, and more particularly no more than 0.4 times the total length (L) of the air supply device (9) and/or that the length (L₂) of the at least one air chamber device (9) is no less than 0.2 times, preferably no less than 0.3 times, particularly preferably no less than 0.4 times, and more particularly no less than 0.45 times the total length (L) of the air supply device (9).

6. A housing assembly (1) according to any one of the preceding claims, **characterized in that** the air passage cross-section (h₂) in at least one transition region (15) between at least one first air supply region (14a, 14c) and at least one second air supply region (14b) is no more than 0.6 times, preferably no more than 0.5 times, particularly preferably no more than 0.45 times, and more particularly no more than 0.4 times the air passage cross-section (h₁) of the air passage opening (10) and/or the air passage cross-section (h₂) in at least one transition region (15) between at least one first air supply region (14a, 14c) and at least one second air supply region (14b) is no less than 0.3a times, preferably no less than 0.4 times, particularly preferably no less than 0.45 times, and more particularly no less than 0.5 times the air passage cross-section (h₁) of the air passage opening (10).

7. A housing assembly (1) according to any one of the preceding claims, **characterized in that** the air passage cross-section (h₃) in at least a part of at least one air chamber unit (13) is no less than 0.6 times, preferably no less than 0.7 times, particularly preferably no less than 0.8 times, and more particularly no less than 0.9 times the air passage cross-section (h₁) of the air supply opening (10) and/or the air passage cross-section (h₃) in at least a part of at least one air chamber unit (13) is no more than 1.1 times, preferably no more than 1 time, particularly preferably no more than 0.9 times, and more particularly no more than 0.8 times the air passage cross-section (h₁) of the air supply opening (10).

8. A housing assembly (1) according to any one of the preceding claims, **characterized in that** at least one air chamber unit (13) has a triangular and/or square shape.

9. A housing assembly (1) according to any one of the preceding claims, **characterized in that** at least one air chamber unit (13) has an asymmetrical design, and in particular at least one first air supply region (14a, 14c) and at least one second air supply region (14b) have differing lengths (L).

10. A housing assembly (1) according to any one of the preceding claims, **characterized in that** at least one housing wall (14), in particular at least one housing wall (14b, 14c) of at least one air chamber unit (13), comprises a sound-absorbing coating (17) at least in some regions.

11. An air-conditioning system (24), in particular a motor vehicle air-conditioning system, **characterized by** a housing assembly (1) according to any one of claims 1 to 10.

12. The air-conditioning system (24) according to claim 11, **characterized in that** at least one heat exchanger (8), in particular at least one evaporator (8), is disposed in the art least one mounting recess (4).

13. A vehicle, in particular a motor vehicle comprising at least one housing assembly (1) according to any one of claims 1 to 10 and/or at least one air-conditioning system (24) according to claim 11 or 12.

## Revendications

1. Dispositif de carter (1) d'un système de climatisation d'un véhicule automobile, comprenant au moins un évidement de montage (4) servant au logement d'un évaporateur (8), présentant au moins un dispositif d'alimentation d'air (7) qui forme, en étant contigu à l'évidement de montage (4) au moins au nombre de un, au moins un espace creux d'alimentation d'air (9) dont la section de passage d'air (h), dans au moins une première zone d'alimentation d'air (14a, 14c), diminue en s'éloignant de plus en plus d'au moins une ouverture d'alimentation d'air (10), où l'espace creux d'alimentation d'air (9) présente au moins une deuxième zone d'alimentation d'air (14b) dont la section de passage d'air (h) augmente en s'éloignant de plus en plus de l'ouverture d'alimentation d'air (10) au moins au nombre de un, où au moins une ouverture d'alimentation d'air (10) est, au moins de façon partielle, disposée latéralement par rapport à l'espace creux d'alimentation d'air (9) et, dans la zone d'au moins une ouverture d'alimentation d'air (10), une entrée d'air (A) se produit en oblique (α) par rapport au moins à un évidement de montage (4), et
**caractérisé en ce que** l'ouverture d'alimentation d'air (10) est perpendiculaire à la surface frontale de l'évaporateur baignée par l'écoulement de l'air, et l'entrée d'air se produit en oblique (α), de manière telle que la composante de l'entrée d'air perpendiculaire à la surface frontale de l'évaporateur (8) s'écarte de l'évaporateur (8).

2. Dispositif de carter (1) selon la revendication 1, **caractérisé en ce que** la section de passage d'air (h), dans au moins une première zone d'alimentation d'air (14a, 14c) et / ou dans au moins une deuxième zone d'alimentation d'air (14b), au moins diminue (14a, 14c) ou augmente (14b), sensiblement au moins partiellement de façon constante, de préférence de façon uniforme, en particulier de façon strictement uniforme.

3. Dispositif de carter (1) selon la revendication 1 ou 2, **caractérisé en ce qu'**au moins une première zone d'alimentation d'air (14a, 14c) et / ou au moins une deuxième zone d'alimentation d'air (14b) est configurée comme une paroi de carter (14) du dispositif d'alimentation d'air (9).

4. Dispositif de carter (1) selon l'une quelconque des revendications précédentes, **caractérisé par** au moins un dispositif à chambres d'air (13) qui est par au moins une deuxième zone d'alimentation d'air (14b), de préférence par au moins une première zone d'alimentation d'air (14a, 14c) et par au moins une deuxième zone d'alimentation d'air (14b).

5. Dispositif de carter (1) selon l'une quelconque des revendications précédentes, caractérisé on ce que la longueur (L₂) du dispositif à chambres d'air (13) au moins au nombre de un n'est pas de plus de 0,6 fois, de préférence pas de plus de 0,5 fois, de façon particulièrement préférable pas de plus de 0,45 fois, en particulier pas de plus de 0,4 fois supérieure à la longueur totale (L) du dispositif d'alimentation d'air (9), et / ou en ce que la longueur (L₂) du dispositif à chambres d'air (13) au moins au nombre de un n'est pas de moins de 0,2 fois, de préférence pas de moins de 0,3 fois, de façon particulièrement préférable pas de moins de 0,4 fois, en particulier pas de moins de 0,45 fois inférieure à la longueur totale (L) du dispositif d'alimentation d'air (9).

6. Dispositif de carter (1) selon l'une quelconque des revendications précédentes, **caractérisé en ce que** la section de passage d'air (h₂), dans au moins une zone de transition (15) située entre au moins une première zone d'alimentation d'air (14a, 14c) et au moins une deuxième zone d'alimentation d'air (14b), n'est pas de plus de 0,6 fois, de préférence pas de plus de 0,5 fois, de façon particulièrement préférable pas de plus de 0,45 fois, en particulier pas de plus de 0,4 fois supérieure à la section de passage d'air (h₁) de l'ouverture d'alimentation d'air (10), et / ou la section de passage d'air (h₂), dans au moins une zone de transition (15) située entre au moins une première zone d'alimentation d'air (14a, 14c) et au moins une deuxième zone d'alimentation d'air (14b), n'est pas de moins de 0,3 fois, de préférence pas de moins de 0,4 fois, de façon particulièrement préférable pas de moins de 0,45 fois, en particulier pas de moins de 0,5 fois inférieure à la section de passage d'air (h₁) de l'ouverture d'alimentation d'air (10).

7. Dispositif de carter (1) selon l'une quelconque des revendications précédentes, **caractérisé en ce que** la section de passage d'air (h₃), dans au moins une partie d'au moins un dispositif à chambres d'air (13), n'est pas de moins de 0,6 fois, de préférence pas de moins de 0,7 fois, de façon particulièrement préférable pas de moins de 0,8 fois, en particulier pas de moins de 0,9 fois inférieure à à section de passage d'air (h₁) de l'ouverture d'alimentation d'air (10), et / ou la section de passage d'air (h₃), dans au moins une partie d'au moins un dispositif à chambres d'air (13), n'est pas de plus de 1,1 fois, de préférence pas de plus de 1,0 fois, de façon particulièrement préférable pas de plus de 0, 9 fois, en particulier pas de plus de 0,8 fois supérieure à à section de passage d'air (h₁) de l'ouverture d'alimentation d'air (10).

8. Dispositif de carter (1) selon l'une quelconque des revendications précédentes, **caractérisé en ce qu'**au moins un dispositif à chambres d'air (13) présente une configuration de forme triangulaire et / ou carrée.

9. Dispositif de carter (1) selon l'une quelconque des revendications précédentes, **caractérisé en ce qu'**au moins un dispositif à chambres d'air (13) est configuré de façon asymétrique, et en particulier au moins une première zone d'alimentation d'air (14a, 14c) et au moins une deuxième zone d'alimentation d'air 114b) présentent une longueur (L) différente.

10. Dispositif de carter (1) selon l'une quelconque des revendications précédentes, **caractérisé en ce qu'**au moins une paroi de carter (14), en particulier au moins une paroi de carter (14b, 14c) d'au moins un dispositif à chambres d'air (13), présente, au moins partiellement, un revêtement (17) absorbant les bruits.

11. Système de climatisation (24), en particulier système de climatisation pour véhicule automobile, **caractérise par** un dispositif de carter (1) selon l'une quelconque des revendications 1 à 10.

12. Système de climatisation (24) selon la revendication 11, caractérisé on ce qu'au moins un échangeur de chaleur (8), en particulier au moins un évaporateur (8), est disposé dans l'évidement de montage (4) au moins au nombre de un.

13. Véhicule, en particulier véhicule automobile, présentant au moins un dispositif de carter (1) selon l'une quelconque des revendications 1 à 10 et / ou au moins un système de climatisation (24) selon la revendication 11 ou 12.
